# EUROPEAN PATENT APPLICATION

(11) **EP 2 295 131 A1**
(43) Date of publication of application: **16.03.2011**
(21) Application number: 09773258.0
(22) Date of filing: 04.06.2009
(51) Int. Cl.: B01D 63/02, B01D 63/00, B01D 63/04

(54) **SUBMERGED HOLLOW FIBER MEMBRANE MODULE**

(30) Priority: 01.07.2008 JP 2008172128
(71) Applicant: Toray Industries, Inc., Tokyo, 103-8666 (JP)
(72) Inventor: SUZUKI, Hironobu, Otsu-shi Shiga 520-8558 (JP); MATSUMOTO, Hiroshi, Otsu-shi Shiga 520-8558 (JP); KANAMORI, Hiromitsu, Otsu-shi Shiga 520-8558 (JP)
(74) Representative: Prüfer & Partner GbR European Patent Attorneys
(86) International application number: PCT/JP2009/060213
(87) International publication number: WO 2010/001680

(57) **Abstract**

The abilities of a hollow fiber membrane to peel off and discharge suspended materials in washing the hollow fiber membranes is enhanced and long-term durability in terms of physical strength of a module is improved by a submerged hollow fiber membrane module comprising a cylindrical housing having openings at the upper and lower ends, in which at least a part of an upper half of an external exposed part of a peripheral wall is composed of a porous component and a lower half of the external exposed part of the peripheral wall is not opened, hollow fiber membrane bundles each comprising many hollow fiber membranes placed vertically in the cylindrical housing, a hollow fiber membrane bundle binding component which is disposed at an upper end part of the hollow fiber membranes, fixes the hollow fiber membranes in a state where the hollow part of each hollow fiber membrane is opened and is adhesively fixed to the cylindrical housing, a water collecting cap connected to the hollow fiber membrane bundle binding component, a hollow fiber membrane sealing component which is disposed at a lower end part of the hollow fiber membranes and seals the hollow part of each hollow fiber membrane, and an air collecting cylinder which is disposed outside the hollow fiber membrane sealing component and is adhesively fixed to the cylindrical housing, wherein a bonding part in the cylindrical housing, which is bonded to the aforementioned air collecting cylinder, is composed of a porous component.

## Description

### TECHNICAL FIELD

The present invention relates to a hollow fiber membrane module which is submerged in a water tank containing raw water being treated and used for filtration of the raw water, that is, a submerged hollow fiber membrane module. For details, the present invention relates to a submerged hollow fiber membrane module which does not decline in filtration performance of a hollow fiber membrane over an extended time period and can reduce a flow rate of air for hollow fiber membrane cleaning to reduce running cost.

### BACKGROUND ART

Membrane separation technology using a hollow fiber membrane is used in a wide range of field such as a field for drinking water production, a field for industrial water production such as industrial water, industrial ultrapure water, foods and medical care, and a field for sewage and wastewater treatment such as urban sewage purification and industrial wastewater treatment. Further, the hollow fiber membrane module is classified into a pressure type and a submerged type.

The submerged hollow fiber membrane module is placed in a submerged state in a water tank, performs filtration by a hollow fiber membrane using suction or water head difference as a driving force and is used as a submerged membrane separation means to obtain filtered water from raw water being treated in a water tank. In this submerged hollow fiber membrane module, the hollow fiber membrane is not put in a housing or the like found in pressure type modules in a housing. Alternatively, even if the outside of the hollow fiber membrane is put in a housing, it is put in a housing provided with many holes through which raw water being treated can be passed through.

In such a separation means using a hollow fiber membrane, the intended amount of permeated water may not be obtained in some cases since in filtering raw water being treated, water content in raw water to be treated is extracted through a hollow fiber membrane as permeated water and impurities remain on the surface of the hollow fiber membrane or with a porous part and therefore clogging of the hollow fiber membrane or channel clogging between the hollow fiber membranes proceeds.

Consequently, physical cleaning typified by reverse pressure backwashing, in which an impurity layer (cake layer) adhering to or accumulated on the surface of the hollow fiber membrane is peeled and removed by injecting permeated water from the permeated water side to the raw water side of the hollow fiber membrane by pressure periodically during an operation, and air scrubbing, in which continuous or intermittent air injection from a lower part of the hollow fiber membrane module causes the hollow fiber membrane to fluctuate or impurities accumulated on the surface of the hollow fiber membrane or between the hollow fiber membranes are peeled and removed by a shear force with air bubbles, is carried out. In this time, preferably, the impurities peeled off from the surface of the hollow fiber membrane are readily discharged out of the hollow fiber membrane module, and therefore it is preferable if the hollow fiber membrane is exposed at both upper end part and lower end part of the hollow fiber membrane, where the impurities are apt to deposit, as disclosed in Patent Document 1.

Furthermore, if the entire hollow fiber membrane is put in a cylindrical housing through which water can pass through as disclosed in Patent Document 2, it is favorable since it is possible not only to supply raw water from a whole area of the peripheral face of the cylindrical housing but also to discharge the impurities from a whole area of the peripheral face of the cylindrical housing during physical cleaning and the ability to discharge the impurities is further improved.

However, in the module structure described in Patent Document 1, there is a problem that since air supplied from a lower section of the module tends to flow out of the module through a location where the hollow fiber membrane is exposed at the lower end part of the hollow fiber membrane during physical cleaning, the air cannot adequately fluctuate the hollow fiber membrane of the upper end part and consequently the impurities on the surface of the hollow fiber membrane cannot be adequately cleaned.

Further, the module structure described in Patent Document 2 also has a problem that air supplied from a lower section of the module tends to flow out of the module through a lower part of a cylindrical housing through which water can pass and therefore the air cannot adequately fluctuate an upper hollow fiber membrane. Accordingly, it is necessary to increase an air supply for fluctuating even the upper hollow fiber membrane and this structure leads to an increase in running cost.

Consequently, in order to solve the problems, a hollow fiber membrane module **characterized in that** the average opening ratio of a peripheral wall at an upper part of the cylindrical housing is larger than the average opening ratio of a peripheral wall at a lower part is proposed, as disclosed in Patent Documents 3 and 4. By using this hollow fiber membrane module, the compressed air for air scrubbing supplied from a lower section of the module is effectively used for cleaning not only the hollow fiber membrane at the lower section of the module but also the hollow fiber membrane at the upper section of the module.

However, in the module structure described in Patent Document 3, since a lower part of the module is directly fixed to the cylindrical housing with an adhesive, the ability to discharge suspended materials from the lower part of the module is poor and the suspended materials removed from the surface of the hollow fiber membrane during cleaning easily remain in a lower part of the module, and therefore it becomes difficult to maintain filtration capacity over an extended time period.

On the other hand, in a hollow fiber membrane module described in Patent Document 4, since a lower part of the module is in an open state, it is possible to achieve an improvement in the ability to discharge the suspended materials and an improvement in the cleaning ability of the hollow fiber membrane simultaneously and it becomes possible to maintain high performance filtration capacity over an extended time period. However, since a component being an upper part of the cylindrical housing is connected directly to the cylindrical housing or bonding of the cylindrical housing to an air collecting cylinder is not strong, problems that physical strength of the cylindrical housing is deteriorated or adhesive strength between components is deteriorated remain and there is a fear that long-term durability of the hollow fiber membrane module is low.
Patent Document 1: JP 2002-346344 A
Patent Document 2: JP 2005-230813 A
Patent Document 3: JP 1987-237908 A
Patent Document 4: International Publication WO 2007/083460

### DISCLOSURE OF THE INVENTION

### PROBLEMS TO BE SOLVED BY THE INVENTION

It is an object of the present invention to provide a hollow fiber membrane module which has excellent long-term durability in terms of physical strength of a module in addition to the characteristics of easily peeling off suspended materials from surface of a hollow fiber membrane and easily discharging the peeled suspended materials out of the hollow fiber membrane module in cleaning the hollow fiber membrane.

### MEANS FOR SOLVING THE PROBLEMS

The hollow fiber membrane module of the present invention for achieving the aforementioned object is as follows.
(1) A submerged hollow fiber membrane module comprising a cylindrical housing having openings at the upper and lower ends, in which at least a part of an upper half of an external exposed part of a peripheral wall is composed of a porous part and a lower half of the external exposed part of the peripheral wall is not opened, hollow fiber membrane bundles each comprising many hollow fiber membranes placed vertically in the cylindrical housing, a hollow fiber membrane bundle binding component which is disposed at an upper end part of the hollow fiber membranes, fixes the hollow fiber membranes in a state where the hollow part of each hollow fiber membrane is opened and is adhesively fixed to the cylindrical housing, a water collecting cap connected to the hollow fiber membrane bundle binding component, a hollow fiber membrane sealing component which is disposed at a lower end part of the aforementioned hollow fiber membranes and seals the hollow part of each hollow fiber membrane, and an air collecting cylinder which is disposed outside the hollow fiber membrane sealing member and is adhesively fixed to the cylindrical housing, wherein a bonding part in the cylindrical housing, which is bonded to the air collecting cylinder, is composed of a porous part.
(2) The submerged hollow fiber membrane module according to (1), wherein the aforementioned hollow fiber membrane bundle binding component has openings in its side face.
(3) The submerged hollow fiber membrane module according to (1) or (2), wherein the many hollow fiber membranes are divided into a plurality of small bundles each composed of a plurality of hollow fiber membranes and wherein the hollow fiber membrane sealing component seals the hollow parts of the hollow fiber membranes in the small bundle, and bundles and integrally fixes the hollow fiber membranes.
(4) The submerged hollow fiber membrane module according to (3), wherein the number of the small bundles is 7 and the number of hollow fiber membranes forming each small bundle is 800 to 1000.

### EFFECTS OF THE INVENTION

According to the present invention, it is possible to improve the physical strength of a cylindrical housing, adhesive strength between the cylindrical housing and a component being an upper open part and adhesive strength between the cylindrical housing and the air collecting cylinder, in addition to the characteristics of easily peeling off suspended materials from surface of a hollow fiber membrane and easily discharging the peeled suspended materials out of the hollow fiber membrane module in cleaning the hollow fiber membrane, and it can offer the hollow fiber membrane module which is superior even in long-term durability.

### BRIEF DESCRIPTION OF THE DRAWINGS

Fig. 1 is a schematic longitudinal sectional view of one example of the hollow fiber membrane module of the present invention.
Fig. 2 is a view of the hollow fiber membrane bundle binding member of the present invention.
Fig. 3 is a development view of a peripheral wall of a cylindrical housing in Fig. 1.
Fig. 4 is a partial enlarged view of the peripheral wall of the cylindrical housing in Fig. 1.
Fig. 5 is a reference view showing a usage state of the hollow fiber membrane module of the present invention.

### DESCRIPTION OF THE REFERENCE NUMERALS

- 1:: hollow fiber membrane module
- 2:: cylindrical housing
- 2a:: opening part of a cylindrical housing
- 2b:: opening of a lower end part of a cylindrical housing
- 2c:: porous component
- 3:: hollow fiber membrane
- 3a:: small bundle of a hollow fiber membrane
- 3b:: hollow part of a hollow fiber membrane
- 3c:: face where a hollow part of a hollow fiber membrane is opened
- 4:: hollow fiber membrane bundle binding component
- 4a:: opening portion of a lower side face of a hollow fiber membrane bundle binding component
- 4b:: lower internal part of a hollow fiber membrane bundle binding component (part bonded to a cylindrical housing)
- 4c:: 4c: upper end face of a hollow fiber membrane bundle binding component
- 4d:: external upper part of a hollow fiber membrane bundle binding component (part connected to a water collecting cap)
- 5:: water collecting cap
- 6:: hollow fiber membrane sealing component
- 6a:: gap between hollow fiber membrane sealing components
- 7:: air collecting cylinder
- 8:: stream inlet
- 9:: filtered water outlet
- 10:: opening portion
- 11:: linear material portion

### BEST MODE FOR CARRYING OUT THE INVENTION

The hollow fiber membrane module of the present invention will be described, with reference to drawings, by way of an example of a case where the hollow fiber membrane module is used for producing drinking water. As well, the hollow fiber membrane module of the present invention is not limited to the hollow fiber membrane module for drinking water and it is also used as hollow fiber membrane modules for water purification processes for industrial water, sewage and all that.

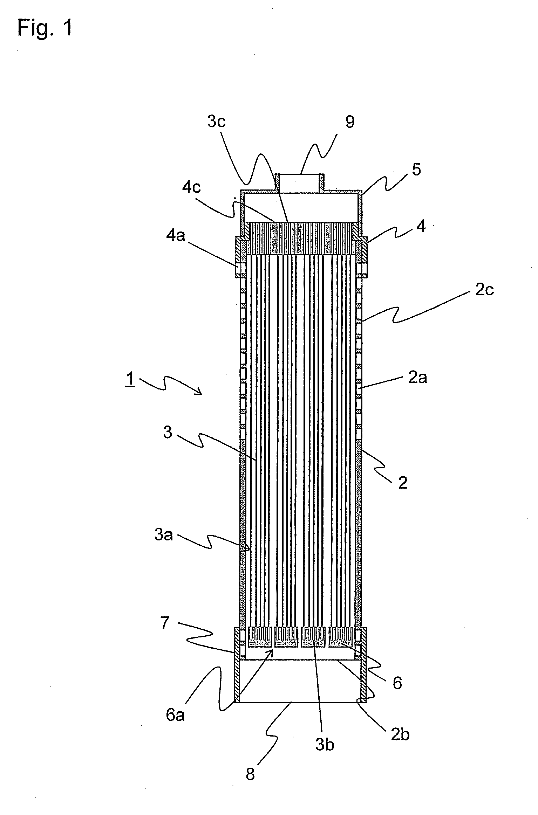

Fig. 1 is a schematic longitudinal sectional view of one example of the hollow fiber membrane module of the present invention.

In Fig. 1, a hollow fiber membrane module 1 of the present invention comprises a cylindrical housing 2 having openings at the upper and lower ends, in which at least a part of a peripheral wall is composed of a porous component, hollow fiber membrane bundles each comprising many hollow fiber membranes 3 placed vertically in the cylindrical housing 2, a hollow fiber membrane bundle binding component 4 which is disposed at an upper end part of the hollow fiber membranes 3, fixes the hollow fiber membranes 3 in a state where the hollow part of each hollow fiber membrane 3 is opened and is adhesively fixed to the cylindrical housing 2, a water collecting cap 5 connected to the hollow fiber membrane bundle binding component 4, a hollow fiber membrane sealing component 6 which is disposed at a lower end part of the hollow fiber membranes 3 and seals the hollow part of each hollow fiber membrane 3, and an air collecting cylinder 7 which is disposed outside the hollow fiber membrane sealing component 6 and is adhesively fixed to the cylindrical housing 2.

In the hollow fiber membrane module 1 of the present invention shown in Fig. 1, many hollow fiber membranes 3 are divided into a plurality of small bundles 3a comprising a plurality of the hollow fiber membranes 3. Each small bundle 3a is loaded in the hollow fiber membrane sealing component 6 which bundles and integrally fixes the hollow fiber membranes 3 and the hollow parts at the lower end part of the hollow fiber membranes 3 are sealed with an adhesive (not shown). The hollow fiber membrane sealing components 6 have gaps 6a therebetween and are positioned independently from one another. That is, the hollow fiber membrane sealing components 6 are disposed independently from one another at the lower end part of the small bundles 3a suspended from the hollow fiber membrane bundle binding component 4 and a position of each hollow fiber membrane sealing component 6 can be varied by a fluid (raw liquid or compressed air for air washing) passing through the gaps 6a.

In addition, in the hollow fiber membrane module of the present invention, the lower end part of each hollow fiber membrane 3 is loaded in the hollow fiber membrane sealing component 6 in the hollow fiber membrane module 1 of Fig. 1, and the hollow part may be sealed with an adhesive (not shown) or a buffer agent layer may be disposed on the adhesive layer in order to prevent damages to the membrane due to the break of membrane at the time of air scrubbing, however, the form of the lower end part is not particularly limited as long as an inherent object of sealing the hollow parts at the lower end part of the hollow fiber membranes, and bundling/integrally fixing the hollow fiber membranes is achieved. Among these, it is preferable from the viewpoint of workability and ensuring the fixation of the hollow fiber membranes and the seal of the hollow parts that the hollow fiber membrane module is a form in which the hollow fiber membrane sealing component 6 is shaped into a housing to hold a small bundle of the hollow fiber membranes 3 as shown in Fig. 1 and the small bundle of the hollow fiber membranes 3 is held in the housing and the desired amount of a fluid adhesive (not shown) penetrates in the hollow part 3b of the hollow fiber membrane 3 and is caused to flow between the hollow fiber membranes and then the adhesive is solidified to fix the hollow fiber membranes 3 and seal the hollow part 3b of the hollow fiber membrane 3. As the aforementioned adhesive, a resin is usually used, and epoxy resins, urethane resins or epoxy acrylate resins, which are used for general purpose and inexpensive and have low impact on water quality, are preferably used. Further, a buffer agent (not shown) used in the buffer agent layer is used for the purpose of preventing damages to the hollow fiber membrane 3 in the hollow fiber membrane sealing component 6, and generally, silicon resins or low hardness urethane resins, which are used for general purpose and inexpensive and have high flexibility are preferably used.

In the hollow fiber membrane module of the present invention, the hollow fiber membrane sealing component, which seals the hollow parts at the lower end part of the hollow fiber membranes, is preferably composed of a plurality of hollow fiber membrane sealing component 6 which have spaces therebetween and are independent from one another like the hollow fiber membrane sealing component 6 in the hollow fiber membrane module 1 of Fig. 1.

The hollow fiber membrane sealing component may be made of an end plate. When the hollow fiber membrane sealing component is made of an end plate, the hollow fiber membrane sealing component can be a form in which the end plate is fixed to the cylindrical housing 2 in a state where an openings 2b at the lower end of the cylindrical housing 2 is clogged with the end plate and a plurality of fluid channels, which are communicated with the outside/inside of the cylindrical housing 2 away from the parts where the hollow parts at the lower end parts of the hollow fiber membranes 3 are sealed, are located as uniformly as possible in a plane of the end plate.

In the hollow fiber membrane module of the present invention, the form of the hollow fiber membrane bundle binding component is not particularly limited as long as an inherent object of being used integrally with an adhesive (not shown), fixing the hollow parts at the upper end parts of the hollow fiber membranes in a state where the hollow parts are opened, being adhesively fixed to a peripheral part of an upper end of the cylindrical housing and being one to which the water collecting cap can be connected is achieved. Among these, it is preferable from the viewpoint of ease of production of the hollow fiber membrane module that the hollow fiber membrane bundle binding component 4 holds the hollow fiber membrane bundle composed of many hollow fiber membranes 3 as shown in Fig. 1 and has a shape of cylinder having a part bonded to the cylindrical housing 2 at the inside and a part bonded to the water collecting cap 5 at the upper outside. When one example of manufacturing peripheral parts of the hollow fiber membrane bundle binding component 4 in the hollow fiber membrane module of Fig. 1 will be described below, it is preferable from the viewpoint of workability and ensuring the fixation of the hollow fiber membranes that the hollow fiber membrane bundle binding component 4 is a form in which the hollow fiber membrane bundle binding component 4 is embedded to a peripheral part of an upper end of the cylindrical housing 2 in which many hollow fiber membranes 3 have been previously loaded and a tip of the hollow fiber membrane bundle is protruded a little through the top end face 4c of the hollow fiber membrane bundle binding component 4 and a fluid adhesive (not shown) is caused to flow between many hollow fiber membranes 3 and then the adhesive is solidified to fix the hollow fiber membranes 3 to the inside of the hollow fiber membrane bundle binding component 4 and thereafter the hollow parts of the hollow fiber membranes 3 is opened by cutting an end part protruded through the top end face 4c of the hollow fiber membrane bundle binding component 4. This work of fixing the hollow fiber membranes in a state where the hollow parts are opened is generally referred to as potting and is widely known. As the aforementioned adhesive, a resin is usually used, and epoxy resins, urethane resins or epoxy acrylate resins, which are used for general purpose and inexpensive and have low impact on water quality, are preferably used. Further, a buffer agent layer may be disposed beneath the adhesive layer in order to prevent damages to the membrane due to the break of membrane at the time of air scrubbing. As a buffer agent used in this time, generally, silicon resins or low hardness urethane resins, which are used for general purpose and inexpensive and have high flexibility are preferably used.

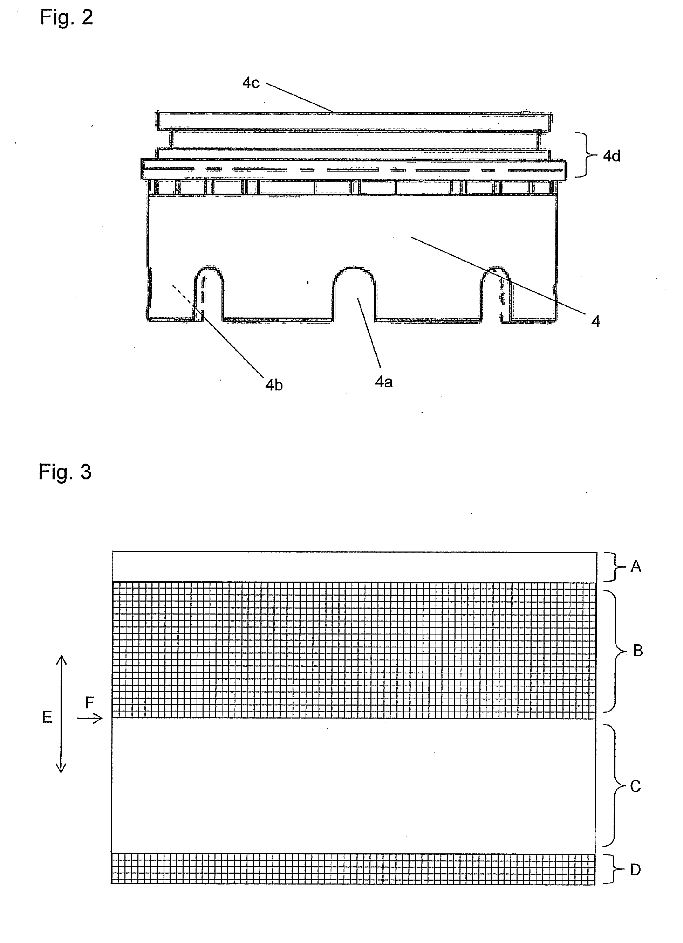

Fig. 2 is a view of the hollow fiber membrane bundle binding component 4 of the present invention. In Fig. 2, parts in the same as those of the hollow fiber membrane module 1 in Fig. 1 are denoted by the same reference numerals.

In Fig. 2, a lower internal part 4b of the hollow fiber membrane bundle binding component 4 is a part adhesively fixed to a peripheral part of an upper end of the cylindrical housing. The inside of the hollow fiber membrane bundle binding component 4 is in a state where the hollow fiber membrane bundle composed of many hollow fiber membranes is loaded in the hollow fiber membrane bundle binding component 4, and the inside of the hollow fiber membrane bundle binding component 4 usually becomes a state where the openings of the hollow fiber membranes are aligned with the top end face 4c of the hollow fiber membrane bundle binding member 4 by undergoing the above-mentioned potting work. Openings 4a are disposed in a lower side face of the hollow fiber membrane bundle binding component 4. Further, a location at which the hollow fiber membrane bundle binding component 4 is connected to the water collecting cap is preferably an external upper part 4d of the hollow fiber membrane bundle binding component 4, and in this connection, those capable of retaining airtightness such as O-rings or flat gaskets are attached to the external upper part 4d of the hollow fiber membrane bundle binding component 4. Alternatively, an adhesive may be applied to the external upper part 4d of the hollow fiber membrane bundle binding component 4 and the hollow fiber membrane bundle binding component 4 may be adhesively fixed to the water collecting cap. Furthermore, those capable of retaining airtightness such as flat gaskets may be attached to a rim of an upper end face 4c of the hollow fiber membrane bundle binding component 4 and the hollow fiber membrane bundle binding component 4 may be connected to the water collecting cap.

In accordance with the structure of the hollow fiber membrane module of the present invention, since the cylindrical housing 2 is not directly connected to the water collecting cap 5 by interposing the hollow fiber membrane bundle binding component 4 like the hollow fiber membrane module 1 of Fig. 1 therebetween, a hollow fiber membrane module, in which the physical strength of an upper part of the cylindrical housing 2 is reinforced, the ability to be connected to the water collecting cap 5 is improved, and long-term durability is excellent, can be provided. Further, ease of production can be improved since role-sharing between components in the hollow fiber membrane module can be defined.

In the present invention, as with the hollow fiber membrane bundle binding component 4 shown in Figs. 1 and 2, the hollow fiber membrane bundle binding component 4 preferably has the openings 4a in its side face. The reason for this will be described in detail later, and by employing such an aspect, air accumulation and remaining of suspended materials at an upper section of the hollow fiber membrane bundle binding component at the time of air scrubbing disappears and the removal of the suspended materials can be performed with efficiency.

The shape of openings 4a of the hollow fiber membrane bundle binding component 4 shown in Fig. 2 is a combined shape of a semicircle and a rectangle and these openings continue up to the lower section, however, any shape of polygons such as a triangle and a quadrangle, a circle, an ellipse, a shape of a star, and the like can be used. Further, a combined shape of a plurality of these shapes may be used. Furthermore, as with the openings 4a shown in Fig. 2, a shape of an opening continuing up to the lower section may be used or a shape in which an opening is closed inside of the hollow fiber membrane bundle binding component 4 may be used.

In the hollow fiber membrane module of the present invention, a filtration region of the hollow fiber membrane refers to a membrane area through which a raw water contacting with the surface of the hollow fiber membrane can be filtered and can flow in the hollow part of the hollow fiber membrane as filtered water.

In the hollow fiber membrane module of the present invention, the hollow fiber membrane bundle preferably comprises several hundreds to several tens of thousands of hollow fiber membranes.

In the hollow fiber membrane module of the present invention, when a small bundle mode in which the hollow fiber membranes are divided into a plurality of small bundles is employed, the number of hollow fiber membranes forming the small bundle is preferably several tens to several thousands. Herein, the number of divisions into small bundle or the number of hollow fiber membranes forming one small bundle may be selected so as to achieve intended effects in accordance with the diameter or the length of the cylindrical housing and further the diameter of the hollow fiber membrane.

For example, if a hollow fiber membrane module 1, in which the diameter of the cylindrical housing 2 is 50 to 400 mm, the length is 500 to 3000 mm and the diameter of the hollow fiber membrane 3 is about 0.5 to about 2 mm, is employed, the number of the small bundles 3a is preferably about 3 to about 1000, and more preferably 3 to 50. If the number of the small bundles 3a is small, the ability to discharge the suspended materials is deteriorated, and on the contrary, if the number of the small bundles 3a is large, the ability to discharge the suspended materials becomes good but the production of the hollow fiber membrane module 1 becomes complicated.

The number of the hollow fiber membranes 3 forming one small bundle 3a is preferably 50 to 2000. If the number of the hollow fiber membranes 3 forming one small bundle 3a is small, the number of the small bundles 3a increases and the production of the hollow fiber membrane module 1 becomes complicated as described above, and on the contrary, if the number of the hollow fiber membranes 3 forming one small bundle 3a becomes too large, the suspended materials are easily deposited between the hollow fiber membranes 3.

In addition, as described above, when the small bundle mode is employed, a combination of the number of the small bundles 3a and the number of the hollow fiber membranes 3 forming one small bundle 3a becomes important, and it is particularly preferable that the number of the small bundles 3a is 7 and the number of the hollow fiber membranes 3 forming one small bundle 3a at this time is 800 to 1000. The reason for this is that if the above-mentioned combination of numeric values is employed, the production of the hollow fiber membrane module 1 is not complicated and the ability to discharge the suspended materials is particularly good.

As the shape of the hollow fiber membrane sealing component, any shape of a cylindrical form, a sphere form, a cone form, a pyramid form and the like may be used. The hollow fiber membrane sealing component 6 in Fig. 1 has a shape of a cylindrical column.

The material of the hollow fiber membrane in the hollow fiber membrane module of the present invention is not particularly limited. Examples of the material of the hollow fiber membrane include polysulfone, polyethersulfone, polyacrylonitrile, polyimide, polyetherimide, polyamide, polyetherketone, polyetheretherketone, polyethylene, polypropylene, an ethylene-vinylalcohol copolymer, cellulose, cellulose acetate, vinylidene polyfluoride, an ethylene-tetrafluoroethylene copolymer, polytetrafluoroethylene and the like, and composite materials thereof.

The outer diameter of the hollow fiber membrane in the hollow fiber membrane module of the present invention is preferably 0.3 to 3 mm. If the outer diameter is too small, a problem that the hollow fiber membrane is broken and damaged at the time of handling the hollow fiber membrane in manufacturing the hollow fiber membrane module or at the time of filtration or washing in using the hollow fiber membrane module easily arises. On the contrary, if the outer diameter is too large, since the number of the hollow fiber membranes which can be inserted into the cylindrical housing of the same size decreases, a problem that a filtration area is reduced arises. Further, the thickness of the hollow fiber membrane is preferably 0.1 to 1 mm. If the membrane thickness is too small, there is a problem that the membrane is broken by pressure, and on the contrary, if the membrane thickness is too large, a problem that it leads to pressure loss, an increase of a material cost or the like arises.

The hollow fiber membrane module of the present invention is used for the filtration of raw water with the water collecting cap 5 attached to the upper part of the hollow fiber membranes. That is, in the hollow fiber membrane module 1, the water collecting cap 5, which collects filtered water flowing from openings of the hollow parts 3b of the hollow fiber membranes 3, is connected to the hollow fiber membrane bundle binding component 4 for a plane 3c at which the hollow parts 3b of the hollow fiber membranes 3 at the upper part of the hollow fiber membrane bundle binding component 4 are opened. The water collecting cap 5 has a filtered water outlet 9 to guide the collected filtered water outward.

The hollow fiber membrane module of the present invention is used in a state where an air collecting cylinder is attached to a lower part of the hollow fiber membranes. That is, in the hollow fiber membrane module 1, the air collecting cylinder 7 for introducing the compressed air for air scrubbing into the cylindrical housing 2 is disposed around the openings 2b of a lower end of the cylindrical housing 2.

The cylindrical housing 2, the hollow fiber membrane bundle binding component 4, the water collecting cap 5, the hollow fiber membrane sealing component 6, and the air collecting cylinder 7 are usually formed from resins. As the resin for forming these, for example, polyolefin-based resins such as a polyethylene resin, polypropylene, and polybutene, fluorine-based resins such as polytetrafluoroethylene (PTFE), perfluoroalkoxy (PFA), fluorinated ethylene propylene (FEP), ethylene-tetrafluoroethylene (ETFE), chlorotrifluoroethylene (PCTFE), ethylene-chlorotrifluoroethylene (ECTFE), vinylidene fluoride (PVDF) and the like, chlorine-based resins such as poly(vinylchloride), poly(vinylidenechloride) and the like, a polysulfone resin, a polyethersulfone resin, a polyallylsulfone resin, a polyphenylether resin, an acrylonitrile-butadien-styrene copolymer resin (ABS), an acrylonitrile-styrene copolymer resin, a polyphenylene sulfride resin, a polyamide resin, a polycarbonate resin, a polyetherketone resin, and a polyetheretherketone resin may be used singly or may be used in combination.

The cylindrical housing 2, the hollow fiber membrane bundle binding component 4, the water collecting cap 5, the hollow fiber membrane sealing component 6, and the air collecting cylinder 7 may be formed from materials other than resins. As the materials of this case, aluminum, stainless steel or the like is preferably used. Furthermore, composites of resins and metal or composite materials such as a glassfiber reinforced resin and a carbonfiber reinforced resin can also be used. In addition, the cylindrical housing 2, the hollow fiber membrane bundle binding component 4, the water collecting cap 5, the hollow fiber membrane sealing component 6, and the air collecting cylinder 7 may be formed from the same material or may be formed from different materials, respectively.

In the hollow fiber membrane module of the present invention, at least a part of an upper half of an external exposed part of a peripheral wall of the cylindrical housing is composed of a porous component and a lower half of the external exposed part of the peripheral wall is not opened. One example thereof will be described by use of Figs. 1 and 3.

Fig. 3 is a development view of the peripheral wall of the cylindrical housing 2 in Fig. 1. In Figs. 1 and 3, at least a part of an upper half of an external exposed part of the peripheral wall of the cylindrical housing 2 of the hollow fiber membrane module 1 of the present invention is composed of a porous component 2c having mesh-like openings.

Of the peripheral wall of the cylindrical housing 2, a part bonded to the hollow fiber membrane bundle binding component 4 and a part bonded to the air collecting cylinder 7 are not usually exposed externally in usual use, and therefore parts other than these parts, which can be seen externally exposed in usual use are referred to as an external exposed part. In the present invention, it is necessary that in the external exposed part of the peripheral wall of the cylindrical housing 2, at least a part of an upper half thereof is composed of the porous component 2c and a lower half is not opened. Herein, the upper half of the external exposed part of the cylindrical housing 2 refers to a peripheral wall of a part (region B in Fig. 3) on the hollow fiber membrane bundle binding component 4 side of a substantially central position (position indicated by an arrow F in Fig. 3) in the longitudinal direction (direction of an arrow E in Fig. 3) of the cylindrical housing 2 of a whole peripheral wall region of the cylindrical housing 2 excluding the part (region A in Fig. 3) which is bonded to the hollow fiber membrane bundle binding component 4 and is not exposed externally and the part (region D in Fig. 3) which is bonded to the air collecting cylinder 7 and is not exposed externally. Similarly, the lower half of the external exposed part of the cylindrical housing 2 refers to a peripheral wall of a part (region C in Fig. 3) on the air collecting cylinder 7 side of a substantially central position (position indicated by an arrow F in Fig. 3) in the longitudinal direction (direction of an arrow E in Fig. 3) of the cylindrical housing 2.

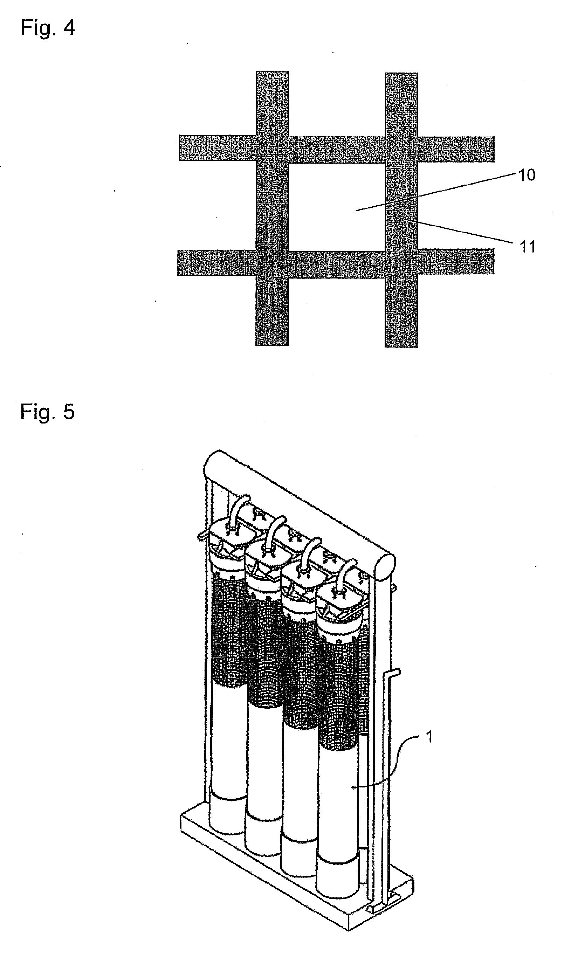

Fig. 4 is a partial enlarged view of the upper half of the external exposed part of the peripheral wall of the cylindrical housing 2. In Fig. 4, the peripheral wall is divided into opening portions 10 and a linear material portion 11. In the development view of the peripheral wall of Fig. 3, if a projected area of the region B is denoted by X and a sum of projected areas of the opening portions 10 in Fig. 4 is denoted by Y, an average opening ratio in the upper half (region B) of the external exposed part of the peripheral wall of the cylindrical housing 2 is determined from the equation: Y/X x 100 (%).

The distribution (a position of each opening portion 10 and a distribution of an opening area) of the opening portions 10 in the upper half of the external exposed part of the peripheral wall of the cylindrical housing 2 may be a uniform distribution or may be a distribution which is nonuniform along a longitudinal direction (vertical direction) of the cylindrical housing. A distribution which is nonuniform in the circumferential direction is not preferable since this distribution leads to uneven flows of raw water or air.

By disposing the openings in only the upper half (region B) without disposing the openings in the lower half (region C) in the peripheral wall of the external exposed part of the cylindrical housing 2, it is possible to achieve the object of the present invention to reduce a flow rate of air for hollow fiber membrane washing to reduce running cost without deteriorating filtration performance of the hollow fiber membrane, although a detailed reason will be described later.

Of the cylindrical housing 2, the part (region A), which is bonded to the hollow fiber membrane bundle binding component 4 and is not exposed externally, is not limited to its material and shape as long as an inherent object of being bonded to the hollow fiber membrane bundle binding component 4 is achieved, but usually, it is preferably formed from the same material as that of other parts of the cylindrical housing 2 and is preferably in the form of a plate having no opening as shown in Fig. 3.

Of the cylindrical housing 2, the part (region D), which is bonded to the air collecting cylinder 7 and is not exposed externally, needs to be composed of a porous component such as mesh-like porous component from the viewpoint of improving adhesiveness to the air collecting cylinder 7. Particularly when a lower half in the peripheral wall of the external exposed part does not have an opening in using the hollow fiber membrane module of the present invention, an adhesively fixing part between the cylindrical housing 2 and the air collecting cylinder 7 requires high adhesive strength since flow velocity is high and high pressure is applied, however, it is estimated that by employing the aspect of the present invention, an adhesive flows into the openings when the region D of the cylindrical housing 2 is bonded to the air collecting cylinder 7 by use of an appropriate adhesive, and whereby the adhesive strength is enhanced. Particularly when a lower half in the peripheral wall of the external exposed part does not have an opening in using the hollow fiber membrane module of the present invention, the adhesively fixing part between the cylindrical housing 2 and the air collecting cylinder 7 requires high adhesive strength since flow velocity is high and high pressure is applied, and therefore it is preferable to employ this aspect. In addition, as an adhesive used in this time, a resin is usually used, and epoxy resins, urethane resins and epoxy acrylate resins are preferable since they are used for general purpose and inexpensive and have low impact on water quality. Further, the adhesive used is required high adhesive strength, but it is more preferable from the viewpoint of cost and ease of production to use the same adhesive as that used in the upper part of the hollow fiber membrane module or that used in bonding the cylindrical housing 2 to the hollow fiber membrane bundle binding component 4.

The cylindrical housing having the porous components described above in the peripheral wall can be prepared, for example, by respectively arranging different porous components having predetermined average opening ratio at the respective parts.

As the porous component placed at the peripheral wall of the cylindrical housing, plate-like porous components such as a mesh-like material, a net-like material and a punching metal-like material may be used. For example, plate-like porous components or cylindrical porous components molded from a resin, metal nets composed of a metallic wire, or punching metal plates are used. Among the materials, a porous resin molding part, which is inexpensive and low impact on water quality, is preferably used.

Next, a treatment of raw water by the hollow fiber membrane module 1 of the present invention in Fig. 1 will be described.

First, the hollow fiber membrane module 1 is submerged in a water tank (not shown) having a larger depth than the height of the hollow fiber membrane module 1 with the water collecting cap 5 side up. Raw water containing suspended materials is contained in the water tank. If the raw water is drawn in from the filtered water outlet 9 side of the water collecting cap 5 of the hollow fiber membrane module 1 by a pump, the raw water containing the suspended materials in the water tank is introduced into the inside of the hollow fiber membrane module 1 through the openings 2a of the peripheral wall of cylindrical housing 2 or the air collecting cylinder 7 and passes through bundles of the hollow fiber membrane 3 to be filtered, and then the filtered water passes through the filtered water outlet 9 from the water collecting cap 5 and is sent to a water collecting pipe (not shown). The suspended materials in the raw water adhere to the outer surface of the hollow fiber membrane 3 along with this filtration. Further, when the raw water is filtered and extracted out of the water tank by drawing in a filtered water side, since a water level in the water tank is lowered, the raw water is supplied to the water tank as required.

After the filtration step performed for a certain time is completed, backwashing, in which the permeated water or the compressed air is flown from the water collecting cap 5 side to raw water side, or air scrubbing, in which the compressed air is supplied from an air pipe (not shown) placed at a lower section of the hollow fiber membrane module 1 to the inside of the hollow fiber membrane module 1 through the air collecting cylinder 7 at the lower part of the hollow fiber membrane module 1 to discharge the suspended materials accumulated in the hollow fiber membrane module 1 out of the system, is performed.

In the backwashing, since the permeated water flows outward from the inside of the hollow fiber membrane 3, the suspended materials adhering to the outer surface of the hollow fiber membrane 3 are peeled off from the outer surface of the hollow fiber membrane 3, or become easy to be peeled. Then, in next air scrubbing, fine suspended materials are discharged out of the system of the hollow fiber membrane module 1 through the openings 2a of the peripheral wall of cylindrical housing 2 or the air collecting cylinder 7, and discharged from the water tank by draining conducted afterward.

In this case, in the hollow fiber membrane module 1, since the hollow fiber membrane sealing component 6 is not fixed to the cylindrical housing 2, the hollow fiber membrane 3 is fluctuated together with the hollow fiber membrane sealing component 6 by air scrubbing. By this fluctuation, peeling of the suspended materials adhering to the surface of the hollow fiber membrane 3 is performed with efficiency. Furthermore, also when the suspended materials are discharged from the lower section of the hollow fiber membrane module 1, the suspended materials hardly remain in the hollow fiber membrane module 1 since water containing the suspended materials passes through gaps 6a between a plurality of the hollow fiber membrane sealing components 6 which freely move to be discharged, and whereby deterioration of filtration performance can be prevented. The filtration treatment of raw water is continued over an extended time period while repeating these steps.

Next, an air flow during air scrubbing in the hollow fiber membrane module 1 of the present invention will be described.

In Fig. 1, compressed air supplied from the air pipe (not shown) placed at a lower section of the hollow fiber membrane module 1 is introduced into the hollow fiber membrane module 1 through the air collecting cylinder 7 and outflows from the openings 2a of the cylindrical housing 2. In the present invention, since the cylindrical housing 2 has openings in only an upper half of the external exposed part of the cylindrical housing 2, the introduced air does not outflow from a lower half of the external exposed part of the cylindrical housing 2 but outflows from the upper half of the external exposed part. Therefore, the compressed air is supplied to most parts in the cylindrical housing 2 and whereby, not only the hollow fiber membrane 3 located at a lower section of the hollow fiber membrane module 1 but also the hollow fiber membrane 3 located at an upper section can be fluctuated to such an extent that the suspended materials on the surface of the hollow fiber membrane 3 can be peeled off. Accordingly, it is possible to use the compressed air effectively and reduce the amount of air introduced into the hollow fiber membrane module 1 to reduce running cost of water treatment.

Further, by employing an aspect of having openings in only the upper half of the external exposed part of the cylindrical housing 2 as described above, the suspended materials peeled off from the surface of the hollow fiber membrane 3 during air scrubbing are discharged out of the hollow fiber membrane module 1 through the peripheral wall of the cylindrical housing 2 at the upper section of the hollow fiber membrane module 1 together with a water flow from the lower section to the upper section in the hollow fiber membrane module 1, which is generated by the compressed air. On the other hand, the suspended materials does not outflow from the external exposed part of the peripheral wall of the cylindrical housing 2 at a lower section of the hollow fiber membrane module 1, but in this case, there is no problem since the suspended materials are not deposited at the lower section of the hollow fiber membrane module 1, pass through the gaps 6a between a plurality of the hollow fiber membrane sealing components 6 which freely move, and are discharged from the air collecting cylinder 7 to the lower section of the hollow fiber membrane module 1.

As another embodiment of the hollow fiber membrane module of the present invention, the form of the cylindrical housing in a module (not shown), in which a projected area of each opening at the external exposed part of the peripheral wall of the cylindrical housing increases continuously or gradually upward from substantially central position of the cylindrical housing, may be employed.

The shape of the opening portions 10 shown in Fig. 4 is a quadrangle, but polygons such as a triangle, a pentagon and a hexagon, a circle, an ellipse, a shape of a star or the like can also be used as a shape of the opening. A plurality of these shapes may be used in combination.

In the hollow fiber membrane module of the present invention, the hollow fiber membrane bundle binding component preferably has openings in its side face, and by employing such an aspect, air accumulation is not generated at an upper section of the hollow fiber membrane bundle binding component and simultaneously the suspended materials can be discharged to outside since air can be discharged through the openings. In the hollow fiber membrane module of Fig. 1, most of the compressed air introduced from the air collecting cylinder 7 outflows from the openings of the cylindrical housing 2, however, part of the compressed air flows in the upper part of the hollow fiber membrane bundle binding component 4. In this case, if the hollow fiber membrane bundle binding component has a structure of not having openings in its side face, air having flown in the upper part of the hollow fiber membrane bundle binding component 4 once is not discharged to become air accumulation and this may interfere with discharging of the suspended materials in some cases. However, as shown in Figs. 1 and 2, if the openings 4a are provided in this part, the air and the suspended materials are discharged through the openings 4a without generating air accumulation and whereby efficiency of discharging the suspended materials at the time of air scrubbing can be enhanced.

The hollow fiber membrane sealing component of the present invention may be partially connected to an adjacent hollow fiber membrane sealing component. This connecting is performed, for example, by a rod-like body or a string-like body. By this connecting, since the hollow fiber membrane sealing components becomes a state of holding hands with one another, only the hollow fiber membrane sealing component in the specific position is not fluctuated and a force of vibration or fluctuation can be propagated to another hollow fiber membrane sealing component. Simultaneously, positions of the small bundles can be moderately regulated, and whereby, the dispersibility of raw water or air is improved. The improvement in the dispersibility brings in further improvement in effect of preventing the occurrence of fouling of the hollow fiber membrane or effect of preventing the occurrence of entanglement between small bundles.

The hollow fiber membrane sealing component of the present invention may have a planar bottom face or a hemispheric bottom face, and further, may have a turbulence-generating part (not shown) formed by a blade or spiral groove at a part of its peripheral surface. The hollow fiber membrane module having a hollow fiber membrane sealing component provided with the turbulence-generating part is preferably employed when filtering raw water containing many suspended materials. The reason for this is that the raw water or the air can impinge on the turbulence-generating parts to impart micro-vibrations or micro-fluctuations to the small bundles.

In the case of the hollow fiber membrane module 1 of Fig. 1, if there is a hollow fiber membrane having a short length between the bottom face of the hollow fiber membrane bundle binding component 4 and the top face of the hollow fiber membrane sealing component 6, that is, a hollow fiber membrane having a length in a filtration region shorter than those of other hollow fiber membranes in a plurality of the hollow fiber membranes 3 forming the small bundle 3a, there will be generated a situation where this hollow fiber membrane having a shorter length comes to bear a weight of the hollow fiber membrane sealing component 6 more than other hollow fiber membranes or all of the weight of the hollow fiber membrane sealing component 6.

There is a fear that this situation may lead to the break of the hollow fiber membrane having a shorter length or may cause this break to progress to other hollow fiber membranes following this break. If the hollow fiber membrane is broken, this causes a problem that the raw water flows in a filtered water side through the broken hollow fiber membrane. On the other hand, it is not easy to manufacture a hollow fiber membrane module in such a manner that lengths in the filtration region of several tens to several thousands of the hollow fiber membranes forming one small bundle are all the same.

In order to solve this problem, in the hollow fiber membrane module 1 of the present invention, at least one suspending linear body (not shown) may be disposed along the hollow fiber membranes 3 forming each small bundle 3a. One end of the suspending linear body (not shown) is fixed to the hollow fiber membrane bundle binding component 4 fixed to the cylindrical housing 2 together with one end of the hollow fiber membrane 3 and the other end of the suspending linear body is fixed to the hollow fiber membrane sealing component 6 together with the hollow fiber membranes 3 in the small bundle 3a. A length between the bottom face of the hollow fiber membrane bundle binding component 4 and the top face of the hollow fiber membrane sealing component 6 of the suspending linear body (not shown) fixed at both ends, that is, a length in the filtration region is set at a shorter length than that of the hollow fiber membrane having the shortest length in the filtration region. In addition, the length of the hollow fiber membrane 3 in the filtration region and the length of the suspending linear body (not shown) are both a length in a straight line.

By the presence of the suspending linear body (not shown), the weight load of the hollow fiber membrane having a shorter length is mitigated or becomes zero and the break of the hollow fiber membrane due to the excessive weight load is prevented. Naturally, this requires the suspending linear body (not shown) to have larger resistance to weight than that of the hollow fiber membrane.

The suspending linear body (not shown) is formed from, for example, a string or a rod. Examples of the string include metallic wires, natural or synthetic resin fibers, and metallic or resin tubes, and examples of the rod include metallic rods, natural or synthetic resin rods, and metallic or resin tubes. As the resins, a polyethylene resin, a polypropylene resin, a vinyl chloride resin or an acrylic resin is employed. As the metals, stainless steel, aluminum or the like is employed. When the suspending linear body (not shown) is a tube, it may be good to seal an end face of the tube in order to prevent the raw water from flowing in a filtered water side even if the tube is broken. Further, two or more suspending linear body (not shown) are preferably provided per each small bundle 3a. The reason for this is that even if one suspending linear body is exfoliated from the hollow fiber membrane bundle binding component 4 or the hollow fiber membrane sealing component 6, the break of the hollow fiber membrane can be effectively prevented by virtue of other suspending linear bodies.

### INDUSTRIAL APPLICABILITY

The hollow fiber membrane module of the present invention is submerged in a water tank and used for filtration when raw water reserved in the water tank is subjected to filtration treatment.

## Claims

1. A submerged hollow fiber membrane module comprising a cylindrical housing having openings at the upper and lower ends, in which at least a part of an upper half of an external exposed part of a peripheral wall is composed of a porous component and a lower half of the external exposed part of the peripheral wall is not opened, hollow fiber membrane bundles each comprising many hollow fiber membranes placed vertically in said cylindrical housing, a hollow fiber membrane bundle binding component which is disposed at an upper end part of said hollow fiber membranes, fixes said hollow fiber membranes in a state where the hollow part of each hollow fiber membrane is opened and is adhesively fixed to said cylindrical housing, a water collecting cap connected to said hollow fiber membrane bundle binding component, a hollow fiber membrane sealing component which is disposed at a lower end part of said hollow fiber membranes and seals the hollow part of each hollow fiber membrane, and an air collecting cylinder which is disposed outside said hollow fiber membrane sealing component and adhesively fixed to said cylindrical housing, wherein a bonding part in said cylindrical housing, which is bonded to said air collecting cylinder, is composed of a porous component.

2. The submerged hollow fiber membrane module according to claim 1, wherein said hollow fiber membrane bundle binding component has openings in its side face.

3. The submerged hollow fiber membrane module according to claim 1 or 2, wherein said many hollow fiber membranes are divided into a plurality of small bundles each composed of a plurality of hollow fiber membranes and wherein said hollow fiber membrane sealing component seals the hollow parts of the hollow fiber membranes in said small bundle, and bundles and integrally fixes the hollow fiber membranes.

4. The submerged hollow fiber membrane module according to claim 3, wherein the number of said small bundles is 7 and the number of hollow fiber membranes forming said each small bundle is 800 to 1000.
